Europäisches Patentamt

European Patent Office

Office européen des brevets

(11) Veröffentlichungsnummer: **0 191 288 B1**

## EUROPÄISCHE PATENTSCHRIFT

(45) Veröffentlichungstag der Patentschrift: **08.05.91**

(21) Anmeldenummer: **86100145.1**

(22) Anmeldetag: **08.01.86**

(51) Int. Cl.5: **A21C 1/00**, B01F 15/04, B01F 15/00

(54) **Verfahren und Vorrichtung zur Teigbereitung.**

(30) Priorität: **13.02.85 DE 3504860**

(43) Veröffentlichungstag der Anmeldung:
**20.08.86 Patentblatt 86/34**

(45) Bekanntmachung des Hinweises auf die
Patenterteilung:
**08.05.91 Patentblatt 91/19**

(84) Benannte Vertragsstaaten:
**CH DE FR GB IT LI NL**

(56) Entgegenhaltungen:
EP-A- 0 131 264
WO-A-83/00101
DE-U- 8 414 537
GB-A- 1 319 297
US-A- 4 027 859

(73) Patentinhaber: **Dierks & Söhne GmbH & Co.
KG
Sandbachstrasse 1
W-4500 Osnabrück(DE)**

(72) Erfinder: **Ahlert, Dieter
Maschstrasse 2
W-4514 Ostercappeln 1(DE)**
Erfinder: **Böert, Konrad
Oberdorfstrasse 42
W-4520 Melle 2(DE)**
Erfinder: **Maiss, Armin
Andersenstrasse 17
W-4530 Ibbenbüren-Laggenbeck(DE)**

(74) Vertreter: **Busse & Busse Patentanwälte
Postfach 1226 Grosshandelsring 6
W-4500 Osnabrück(DE)**

## Beschreibung

Die Erfindung betrifft ein Verfahren zur Teigbereitung nach dem Oberbegriff des Anspruchs 1 sowie eine Vorrichtung zur Durchführung dieses Verfahrens nach dem Oberbegriff des Anspruchs 13.

Bei der Teigbereitung für Brot oder Feingebäck hat die Entwicklung der Arbeitsverfahren und der Arbeitsvorrichtungen mit der Verbesserung der Geräte zum Mischen, Dosieren, Austragen und Weiterverarbeiten der Teige zwar zur Verlagerung der körperlichen Arbeit auf Maschinen und damit auch zu einer Erhöhung der Produktivität geführt. Die Dosierung der Bestandteile, insbesondere der Hauptbestandteile Mehl und Wasser, ist aber nach wie vor eine Schwierigkeit, die Erfahrung und Urteilssicherheit voraussetzt. Insbesondere infolge schwankender Qualität der Mehle führt eine gleichbleibende Dosierung von Mehl, Wasser und sonstigen Zutaten keineswegs zu gleichmäßigen Teigen und gleichmäßigem Backwerk. Dementsprechend ist es regelmäßig erforderlich, zu Ende des Mischvorgangs den Teig von Hand auf seine Oberflächenbeschaffenheit zu prüfen und dann versuchsweise Mehl, Wasser oder andere Zutaten hinzuzugeben. Der Erfolg dieses Probierverfahrens ist aber keineswegs immer sicher, es können sogar nach mehreren Verbesserungsversuchen unbrauchbare Teigchargen anfallen.

Ersichtlich ist ein solches Probierverfahren nicht nur kritisch, sondern auch in Bezug auf die personelle Arbeitszeit wie auch in Bezug auf die sich mit den versuchsweisen Nachbesserungen ergebenden Mischzeiten und für die Qualität abträglich aufwendig. Bei der Herstellung von Brot in Großbäckereien wird dieser Nachteil besonders deutlich, in denen die Portionierung des Teigs, das Brotbacken, Auskühlen, Verpacken und Versenden bereits in weitgehend selbsttätig arbeitenden Anlagen verwirklicht ist, während die Teigherstellung in dieser Hinsicht weit zurückliegt. Überdies läßt sich das herkömmliche Verfahren mit neuen, geschlossenen Knetmaschinen kaum durchführen.

Aus der GB-A-1 319 297 ist bereits der Vorschlag zu entnehmen, den Energieverbrauch eines Teigmischers über einen ersten Zeitabschnitt des Mischens zu messen und diesen Meßwert für eine nachfolgende Zugabe von Flüssigkeit auszuwerten. Die Auswertung der Energieaufnahme des Teigmischers hat sich in der Praxis allerdings als problematisch erwiesen, weil ein entsprechender Meßwert ungenau und wenig aufschlußreich ist.

Aufgabe der Erfindung ist es dementsprechend, das Verfahren zur Teigbereitung für Brot oder Feingebäck dahingehend weiter zu entwickeln, daß die Unsicherheiten subjektiver Beurteilungen des Teigs sowie die Umstände und Arbeitsdauern infolge probeweise zugegebener weiterer Bestandteile vermindert und Teige großer Gleichmäßigkeit erzielt werden können. Aufgabe der Erfindung ist es in gleicher Weise, eine Vorrichtung zum Herstellen von Teig im vorgenannten Sinne weiter zu entwickeln.

Gemäß der Erfindung wird diese Aufgabe von einem Verfahren nach dem Oberbegriff des Anspruchs 1 durch dessen kennzeichnende Merkmale wie auch von einer Vorrichtung nach dem Oberbegriff des Anspruchs 13 durch dessen kennzeichnende Merkmale gelöst.

In dieser Hinsicht hat sich herausgestellt, daß der Zustand des Teigs bereits in einem frühzeitigen Durchmischungsstadium zuverlässig beurteilbar ist, wie es sich anhand charakteristischer Meßkurven ergeben hat. Eindeutige Zusammenhänge zwischen einem Mangel an Wasser oder Mehl einerseits und den zugehörigen Kurvenverläufen von Meßkurven andererseits sind - in Verbindung mit einer hohen Reproduzierbarkeit dieser Meßkurven - Handhabe für eine selbsttätige Steuerung des Mischprozesses. Diese Eindeutigkeit und Reproduzierbarkeit hat sich auch für Teigmischungen ergeben, die von vornherein mit einem starken Untermaß an einem Hauptbestandteil, z.B. an Wasser, angesetzt werden. Damit läßt sich sicherstellen, daß an diesem im Untermaß angesetzten Hauptbestandteil des Teiges eine Ergänzungsmenge nachgegeben werden muß und nicht etwa schon ein Übermaß vorhanden ist, das erst durch andere Bestandteile aufzuwiegen wäre.

Wird also beispielsweise ein Teig zunächst mit einem Wasseranteil angesetzt, der in jedem Fall, d.h. für alle in Betracht kommenden Mehlsorten, ein Untermaß darstellt, dann läßt sich empirisch aus Meßwerten deinem sehr frühen Zeitabschnitt des Mischens feststellen, wie viel Wasser noch benötigt werden wird. Spätere Meßwerte können dann insbesondere noch zur Feinkorrektur herangezogen werden. Grundsätzlich läßt sich eine solche stufenweise, mittels Meßwerten dosierte Zugabe auch mit dem Mehl als Hauptbestandteil realisieren, wenngleich die Dosierung und Eingabe von Wasser besonders einfach ist.

Voraussetzung für eine derartige Messung ist ein hinreichend empfindlicher und präziser Meßfühler, wie er beispielsweise in der DE-OS 33 36 218 erläutert ist. Eine entsprechend trägheitsarme Meßsonde vermag nicht nur einen Mittelwert der vom gemischten Teig auf die Sonde ausgeübten Reaktionskräfte, sondern auch deren schnelle Schwankungen aufzunehmen, so daß das Meßsignal in mehrere charakteristische Kennwerte wie den Niederfrequenz- bzw. Gleichanteil und auch die Amplituden und die Freqenz höherfrequenter Anteile aufschlüsseln läßt. Es hat sich nämlich gezeigt, daß eine Teigmasse aufschlußreiche höherfrequente Signale über eine derartige Sonde zu liefern vermag, obwohl der Mischvorgang nicht zu Granulaten, sondern zu einer einheitlichen viskosen Masse führt. Die dabei gewinnbaren höherfrequenten Signale sind sogar sehr gut für die Steuerung der Teigbereitung verwertbar, insbesondere lassen sie sich für die benötigte Mischdauer heranziehen.

Aufschlußreich ist weiterhin ein dem Teig zu entnehmendes Temperatursignal als wichtiger Parameter für die Meßwerte zum Zustand des Teigs. In besonders vorteilhafter Weise läßt sich ein Temperatur-Meßelement vorderseitig am Meßfühler für den mechanischen Zustand des Teigs anbringen, so daß ein kompaktes, einheitliches und mit einem Kabel anschließbares Meßsystem entsteht.

Dieses Meßsystem wird mit einer Auswert- und Steuereinheit verbunden, die den Zustand des Teigs anhand von Meßwerten bestimmt, um durch Vergleich mit einem vorgegebenen Sollwert oder durch irgendeine andere geeignete, durch Vorversuche ermittelte Umsetzung Werte zur Dosierung einer Ergänzungsmenge an dem Hauptbestandteil zu ermitteln, ggf. auch die weitere Mischungsdauer zu steuern.

Da die Steuerung vorzugsweise auf ein Feld empirisch gewonnener Vergleichs- oder Umsetzwerte zurückgreift und möglichst leicht anzupassen sein soll, enthält die Auswerteinrichtung vorzugsweise einen Digitalrechner, dem die Meßwerte in digitalisierter Form, typischerweise also nach Umsetzung durch einen Analog-Digital-Wandler, zugeführt werden.

Weitere Merkmale und Vorteile der Erfindung ergeben sich aus den Ansprüchen und der nachfolgenden Beschreibung, in der ein Ausführungsbeispiel des Gegenstands der Erfindung anhand einer Zeichnung näher erläutert ist. In der Zeichnung zeigen:

| Fig. 1 | Seitenansicht einer Vorrichtung zur Teigbereitung, |
| Fig. 2 | vergrößerte schnittbildliche Darstellung eines vorderen Sondenteils als Detail aus Fig. 1, |
| Fig. 3 | Blockschaltbild für die elektrische Steuerung des Teigbereitungsverfahrens, |
| Fig. 4, 5 u. 6 | zeitliche Meßkurvenverläufe nach Mittelwert und Schwingungsamplitude für die Steuerung des Teigbereitungsverfahrens. |

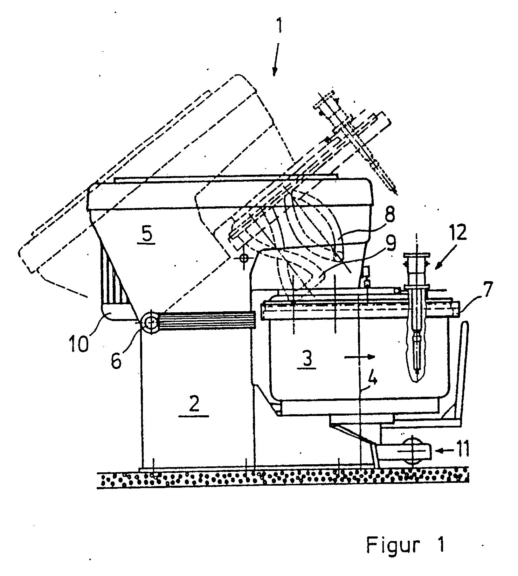

Die in Fig. 1 insgesamt mit 1 bezeichnete Knet- und Mengmaschine besitzt einen überwiegend bekannten Aufbau mit einem Maschinengestell 2, welches u.a. einen Drehantrieb enthält, der einen Bottich 3 um eine Mittelachse 4 zu drehen erlaubt, wobei ein Gestellkopf 5 hochschwenkbar (in die in gebrochenen Linien eingezeichnete Stellung) über ein Gelenk 6 mit dem Maschinengestell 2 verbunden ist.

Der Gestellkopf 5 umfaßt eine Bottichhaube 7 zur Abdeckung des Bottichs und dabei in den Bottich eingreifende Mengwerkzeuge 8,9, die in der Arbeitsstellung um parallel zur Achse 4 umlaufende Werkzeugachsen von einem Antrieb 10 gedreht werden.

Der Bottich 3 ist in gleichfalls bekannter Weise auf eigenem Rollen-Fahrgestell 11 verfahrbar, so daß er an anderer Stelle befüllt, entleert oder anderweitiger Bearbeitung zugeführt werden kann.

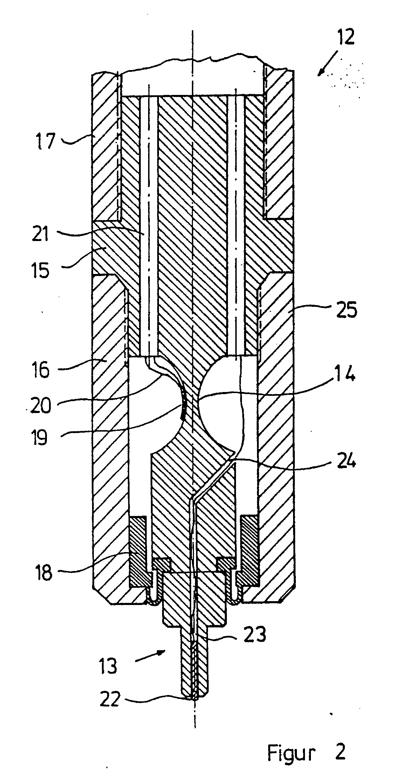

Die Maschine 1 weist in neuer Weise eine trägheitsarme Sonde auf, die in der Bottichhaube 7, in einem außer Reichweite der Werkzeuge 8,9 gelegenen Bereich, etwa parallel zur Achse 4 nach unten in den Bottich 3 gerichtet ist, um während des Mischens Meßwerte über den Zustand des Teiges zu liefern. Die hierzu als Meßwertaufnehmer ausgebildete untere Spitze der Sonde 12 ist aus Fig. 2 näher ersichtlich.

Die Sonde 12 weist einen nach unten vorstehenden Fühler 13 auf, der über einen verschmälerten Biegebereich 14 mit einem Sockel 15 verbunden ist. Der Sockel 15 bildet zusammen mit rohrförmigen Teilen 16,17 ein Sondengehäuse, wobei das Teil 16 unterseitig bis auf einen Bewegungsspalt an den Fühler 13 herangeführt und dort mit einer umlaufenden Dichtung 18 zum Fühler 13 hin abgedichtet ist.

Der massearme Fühler kann, wenn der Teig im Bottich beim Mischen an ihm vorbeistreicht, nicht nur Mittelwerte für die Viskosität des Teigs, sondern auch sehr schnelle Impulswerte, aus der Inhomogenität des Teigs resultierend, aufnehmen, wobei sowohl die Amplituden wie auch die Frequenz solcher inhomogenitätsbedingter Impulssignale für den Zustand des Teigs aufschlußreich sein können.

Das eigentliche Meßsignal wird dabei über Dehnungsmeßstreifen 19 gewonnen, die am Meßfühler 13 im Biegebereich 14 angeklebt sind und die über Leitungen 20 durch eine Bohrung 21 im Sockel 15 mit einer nicht näher dargestellten Auswerteinrichtung verbunden sind.

Der Fühler 13 umfaßt auch einen Temperaturaufnehmer in Form eines NTC-Widerstands 22, der an der unteren Ausmündung einer zunächst zentrisch durch den Meßfühler 13 verlaufenden Bohrung 23 angeordnet ist. Durch diese Bohrung 23, die sich in einer abgewinkelten Ausmündung 24 fortsetzt, verlaufen die elektrischen Leitungen für den NTC-Widerstand. Sie sind dann weiter am Biegebereich des Meßfühlers vorbei und dann durch eine weitere Sockelbohrung 25 nach oben geführt, so daß sie gegenüber dem Bottichinnenraum abgekapselt durch die Bottichhaube 7 herausgeführt werden können. Dieser Temperaturfühler 22 liefert einen Wert für die Temperatur des Teigs, der insbesondere als Parameter für den Teigzustand aufschlußreich ist.

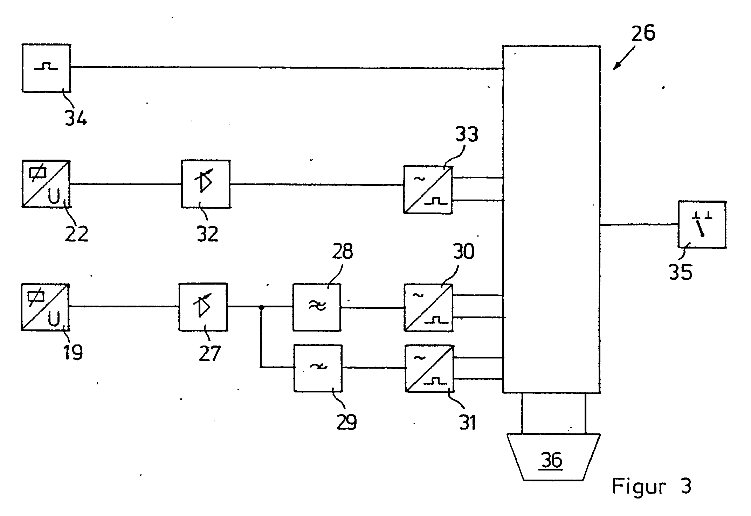

Der zugehörige steuerungstechnische Teil der Vorrichtung zur Teigbereitung ist aus Fig. 3 ersichtlich. Eine zentrale Auswerteinrichtung, die insbesondere einen Digitalrechnerteil umfaßt, ist eingangsseitig mit mehreren Meßwertgebern verbunden. So ist das Dehnungsmeßstreifensystem 19 über einen Verstärker 27 parallel zu zwei Filtern, nämlich einem Hochpaßfilter 28 und einem Tiefpaßfilter 29 geführt, die eine Trennung zwischen den niederfrequenten Signalen und den höherfrequenten Signalen vorsehen. Die sich daraus ergebenden Signalamplituden werden in Analog-Digital-Wandlern 30 bzw. 31 in digitale Signale umgewandelt und in die Auswerteinrichtung 26 eingeführt.

Ein zweiter Signalweg führt von dem Temperaturfühler 22 über einen Verstärker 32 und einen weiteren Analog-Digital-Wandler 33 gleichfalls in die Auswerteinrichtung 26 hinein. Schließlich ist ein Wassermengenzähler 34 in einer (in Fig. 1 nicht dargestellten) Wasserzuleitung zum Bottich 3 angeordnet, die einen Meßwert für eingespeistes Wasser liefert und an die Auswerteinrichtung 26 meldet. Zur Temperaturführung des Mischguts kann in einer zweiten Wasserzuleitung mit einer kälteren, nahe 0° C liegenden Temperatur ("Eiswasser") ein Wassermengenzähler wie der Zähler 34 vorgesehen werden, um eine Mischtemperierung zu ermöglichen.

Aus dem eingegebenen Wert werden Steuerbefehle ermittelt, mit denen eine Schalteinrichtung 35 gesteuert wird, die ein Ventil in der Wasserzuleitung zum Bottich (in der auch der Wassermengenzähler 34 angeordnet auf- bzw. zusteuert. Im Falle einer zweiten Wasserzuleitung kann die Steuerung gesonderte Meßwerte für diese ausgeben. Es kann aber auch ein Mischventil auf eine Solltemperatur des Wassers ausgesteuert werden. An die Auswerteinrichtung 26 ist weiterhin eine Eingabetastatur 36 angeschlossen, mit der vorbekannte Daten, Zeitwerte, Steuerprogramme, Mengen und dgl. eingegeben werden können.

Für die Herstellung eines Brotteigs ist die Arbeitsweise der Vorrichtung darauf gerichtet, daß aus Mehl, Wasser und weitere Zutaten in der richtigen Dosierung ein Teig in geförderter Qualität hergestellt wird. Herkömmlich setzte dieses voraus, daß nach einem Mischgang von beispielsweise 5 oder 7 Minuten subjektiv aus dem Oberflächenbild des Teiges, aus dem Widerstand des Teiges gegen eine hineingreifende Hand und aus der Klebrigkeit Rückschlüsse auf die Konsistenz des Teiges und auf Maßnahmen zu dessen Verbesserung zu befinden war. Demgegenüber können nun während des Mischvorgangs, und zwar bereits zu einem sehr frühen Zeitpunkt beginnend, mit der Sonde 19 Meßwerte aus dem Mischgut erlangt werden, die für den Zustand des Teiges repräsentativ sind und mit guter Zuverlässigkeit eindeutige Werte für die notwendigen Mischungsänderungen zu geben erlauben. Dies gilt sogar für den Fall, daß die Ausgangswerte der Mischung außerhalb des voraussehbaren Mischungsbereichs liegen.

Damit ist es möglich, von den Hauptbestandteilen des Teiges, beim Brotteig also Mehl oder Wasser, einen in einer derart reduzierten Menge einzugeben, daß an diesem Hauptbestandteil in jedem Fall etwas nachzugeben ist bzw., daß auf keinen Fall etwas von dem anderen Hauptbestandteil nachzugeben sein wird. Damit vereinfacht sich die Steuerung so, daß nur ein Hauptbestandteil nachgeliefert werden muß. Von der Lieferung und Dosierung sowie ggf. auch von der Temperaturführung zu einer Temperierung des Mischguts her ist regelmäßig Wasser vorzuziehen.

Zum Beginn des Mischens im Bottich 3 wird also ein Teig mit einer reduzierten Ausbeute bzw. einer reduzierten (Wasser-) Absorbtion, die für alle hier in Betracht kommenden Mehlsorten unterhalb der in Betracht zu ziehenden Absorbtion liegt, gemischt.

Es zeigt sich nun, daß bald nach Mischbeginn sowohl die niederfrequenten Werte der von der Sonde 19 abgegebenen Signale wie auch die Amplituden der höherfrequenten Signale bzw. Impulssignale rasch ansteigen und ein erstes Maximum nach etwa 35 bis 40 sec. Mischzeit erreichen. Dieser erste Maximalwert kann bereits als charakteristisch für die Mischung genommen werden. Insbesondere gibt der niederfrequente Signalwert ein Maß für die Viskosität des Teiges an, die durch Wasserzugabe beeinfluß wird. Grundsätzlich kann bereits aus diesem Wert und mit einmaliger Wasserzugabe ein brauchbarer Teig erzielt werden, der nach einer Mischungsdauer von z.B. 5 bis 7 Minuten verwendbar ist.

Vorzugsweise wird jedoch vorgesehen, die erste Wasserzugabe wiederum reduziert vorzusehen und eine weitere Meßauswertung nach der ersten Wasserzugabe, etwa nach 75 bis 80 sec. seit Mischbeginn vorzusehen. In gleichem Sinn kann eine dritte Messung und nochmalige Korrektur zu einem dritten Meßzeitpunkt nach beispielsweise 100 sec. seit Mischbeginn vorgesehen werden.

Damit läßt sich ein Teig vorgegebener Ausbeute erreichen, der nicht zu fest und nicht zu locker ist und der auch nicht durch eine klebrige Oberfläche Schwierigkeiten der Handhabung in nachfolgenden Maschinen verursacht.

Die Präzision der Meßauswertung wird dadurch erhöht, daß mit dem Temperaturfühler an der Spitze der Sonde auch die Temperatur des Teiges als einem wichtigen Parameter für dessen Zustand gemessen wird. Die Differenz zwischen der gemessenen Temperatur und einer vorgegebenen Bezugstemperatur wird mit Bewertungsfaktoren multipliziert und den Meßwerten hinzuaddiert, um rein temperaturbedingte Veränderungen der Meßwerte auszugleichen. Gleichzeitig ist damit auch eine Temperaturführung des Teigs ermöglicht, wenn etwa die Temperatur zugegebenen Wassers über ein Mischventil und zwei an dieses angeschlossene Leitungen mit kälteren und wärmeren Wasser (genauer "Eis-" und "Kalt"-Wasser) reguliert wird.

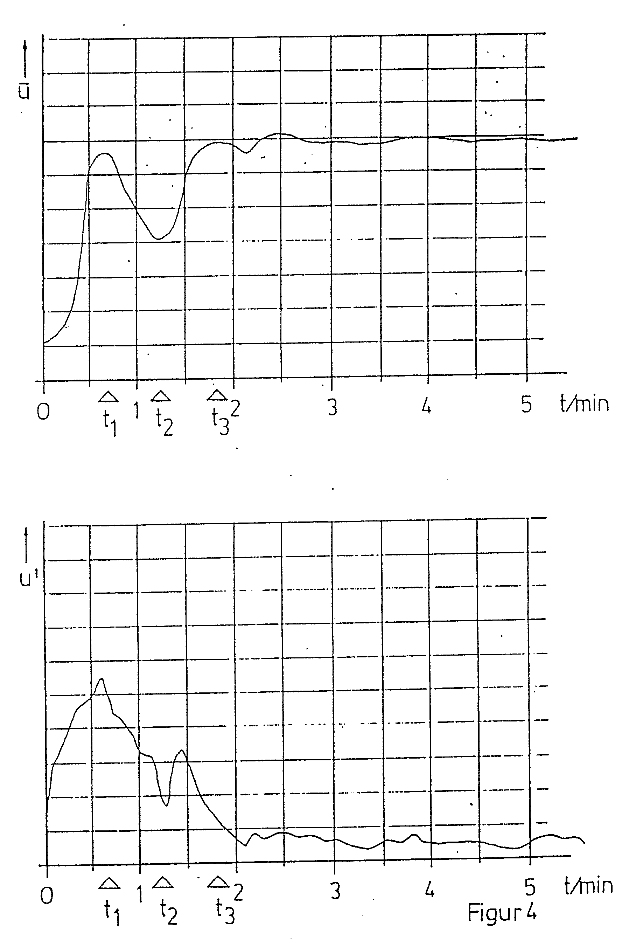

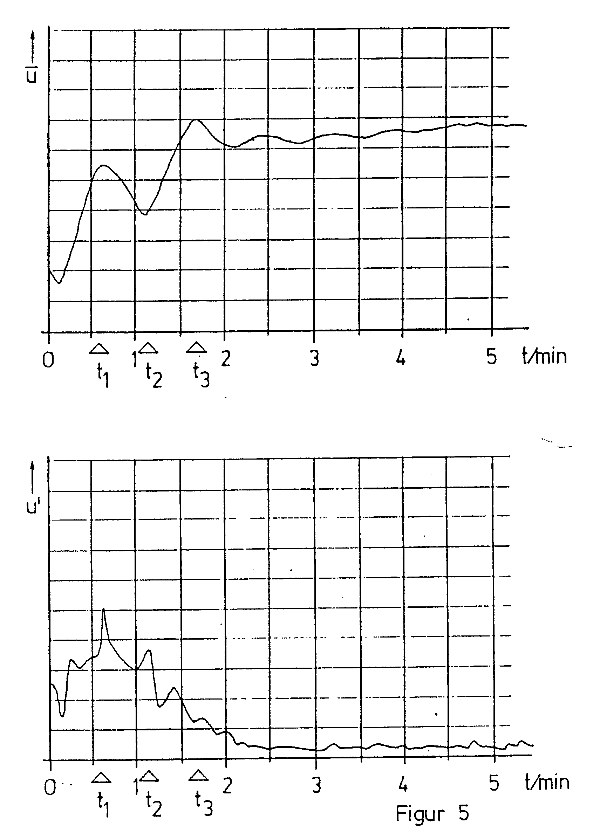

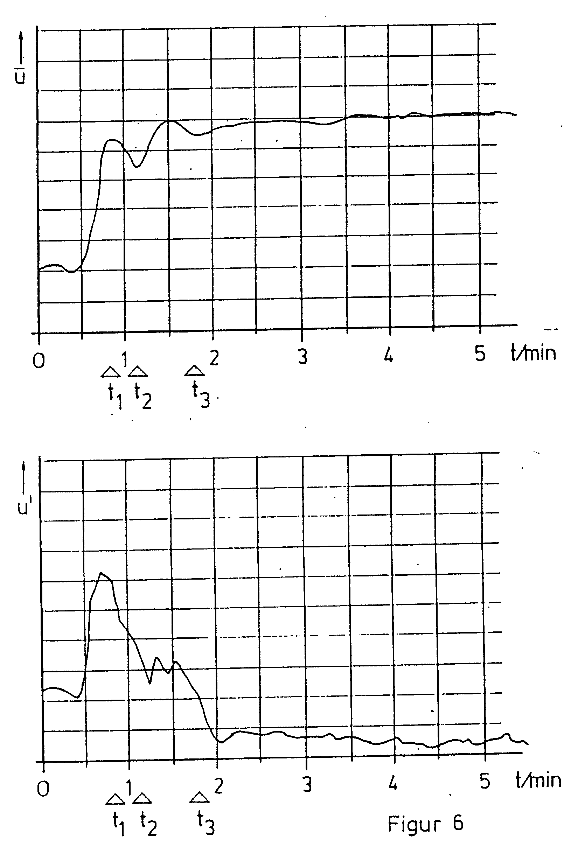

In den Fig. 4 bis 6 sind drei zeitliche Meßkurvenverläufe für den Zustand des Teiges im Verlauf des Mischens (bei zwischenzeitlicher Zugabe von Wasser) dargestellt. Dabei sind in den Zeitdiagrammen mit $\bar{u}$ der gleichförmige (niederfrequente) Mittelwert des Meßsignals und darunter mit u' der impulsförmige (höherfrequente) Wert des Meßsignals aufgezeichnet.

Anhand des Mittelwerts zeigt sich, daß der Teig jeweils nach etwa 35 bis 40 ses. ein Maximum und damit auch einen ersten Beharrungsbereich einnimmt. Gleichzeitig haben die Impulsamplituden ebenfalls einen sehr hohen Wert. Dies zeigt zum einen eine hohe Viskosität und zum anderen eine starke Inhomogenität des Teigs an, was darauf schließen läßt, daß die vorhandene Wassermenge im Mehl verteilt ist und eine zähflüssige Masse geschaffen hat, daß die Verteilung aber noch nicht so homogen ist, daß man den Mischvorgang als abgeschlossen betrachten könnte. In diesem Zeitraum, der in den Diagrammen mit $t_1$ bezeichnet ist, wird in erster Linie aus $\bar{u}$ und dem zugehörigen Temperaturwert (nicht dargestellt) ermittelt, wieviel und mit welcher Temperatur Wasser zuzugeben ist. Diese Wassermenge wird durch Aufsteuerung des Ventils über die Steuerung 35 freigegeben, wobei der Wassermengenzähler 34 eine Kontrolle ausführt. Der Rechnerteil steuert dann auch das Ventil wieder zu, sobald die vorbestimmte Dosierung erreicht ist.

In den Zeitdiagrammen entsteht danach ein weiterer Abfall der Meßkurven mit einem erneuten charakteristischen Beharrungswert zum Zeitpunkt $t_2$ bei etwa 70 bis 80 sec., der zu einer feineren Korrektur der Wasserdosierung verwandt werden kann. Schließlich ist ein dritter Meßzeitpunkt $t_3$ zu einer Mischdauer von 2 bis 2,5 min. angesetzt, bei dem eine nochmalige Feinkorrektur, d.h. eine nochmalige Wasserzugabe, vorgesehen werden kann.

Diese Korrekturen liegen bei einer Gesamtmischdauer von 5 bis 6 min. in der ersten Hälfte der Mischzeit. Damit verlängert sich die Mischzeit durch zwischenzeitliche Korrekturen der Teigausbeute nicht, im Gegensatz zum früheren handüberwachten Teigbereitungsverfahren, in dem erst zum Ende der Mischzeit geprüft, korrigiert und erneut gemischt wurde. Hierin liegt eine wesentliche Leistungssteigerung für vorhandene Mischmaschinen.

Ebenso wichtig ist die Kontrollierbarkeit und Präzision des Mischvorgangs. Es wird ein gleichbleibender, gut weiterverarbeitbarer und backfähiger Teig erzielt und vermieden, daß etwa mit Rücksicht auf die bereits vorliegende Mischdauer ein unzulänglicher, zu fester oder zu klebriger Teig weiterzuverarbeiten ist oder daß sogar eine Teigcharge als irreparabel unbrauchbar ausgesondert werden muß.

Eine solche Beherrschung der Teigbereitung setzt neben den vorerwähnten allgemeinen Erkenntnissen Kennlinienfelder bzw. Datenfelder voraus, die den Meßwerten zuzuordnen sind und die zumindest in einem Pilotprojekt versuchsweise ermittelt werden müssen. Um derartige Kennwerte, Wichtungsfaktoren und dgl. leicht vorgeben oder auch ändern zu können, ist ein Digitalrechner mit seinen Speichermöglichkeiten besonders geeignet.

Bei der Auswertung werden auch die impulsförmigen Anteile des Meßsignals berücksichtigt. Die Inhomogenität des Materials hat z.B. Einfluß auf die Zähflüssigkeit, so daß bei den Meßpunkten $t_1$, $t_2$ und $t_3$ ein sich aus u' ergebender Korrekturwert für $\bar{u}$ anhand der Impulsamplituden eingegeben werden kann. Aufschlußreich sind auch die Frequenzen, die sich im Bereich der ersten Messung $t_1$ typischerweise von sehr tiefen Frequenzen zu wesentlich höheren Frequenzen entwickeln, was mit der zunehmenden Homogenität zusammenhängt. Die Impulsamplituden sind weiterhin aufschlußreich für den Fortschritt des Mischvorgangs. Die Impulsamplituden erlauben es, den Mischvorgang auch hinsichtlich seiner Dauer festzusetzen.

Weiter sind die Impulsamplituden u' geeignet, den genauen Meßzeitpunkt $t_3$ wie auch den Abschluß des Mischvorgangs festzulegen. In dieser Hinsicht wird für $t_3$ ein hinreichend tiefer Abfall der Impulsamplituden ermittelt, während das Ende des Mischvorgangs sich aus dem erneuten Anstieg der Amplituden nach gleichbleibendem Niveau bestimmt.

Auch die Zeitpunkte $t_1$ und $t_2$ sind vorteilhaft in Abhängigkeit von den Meßwerten festlegbar und zwar abhängig von $\bar{u}$. So wird $t_1$ dadurch ermittelt, daß ein Überschreiten eines Maximum von $\bar{u}$ mit einem Abfall des Mischwerts eintritt. Umgekehrt wird $t_2$ entsprechend nach dem Überschreiten eines nachfolgenden Minimum festgestellt.

Es versteht sich schließlich, daß in Abhängigkeit von den Meßwerten auch weitere Zutaten nach Art und Menge gesteuert eingegeben werden können. Insbesondere beim Feingebäck können Lockerungsmittel aber auch sonstige Zutaten wie Milch, Fett, Zucker oder Eier in Abhänigkeit vom Fortschritt des Mischvorgangs zugegeben werden.

Vorstehend sich unter der Bezeichnung Mischer eine Vielzahl für das Mischen und Kneten geeigneter Maschinen zu verstehen. So sind auch mit "Kneter" bezeichnete Maschinen häufig zum Mischen in der Lage. Insbesondere sind hier auch geschlossene "Linienkneter" mit integriertem Knetbehälter, Befüllungseinrichtung, Dosiereinrichtungen und Entleerungseinrichtung einzubeziehen.

**Ansprüche**

1. Verfahren zur Teigbereitung für Brot oder Feingebäck, bei dem Mehl und Wasser als Hauptbestandteil in einen Mischer eingegeben und zu einem Teig durchgearbeitet werden, dessen Zustand überprüft und durch Zugabe eines Hauptbestandteils geändert wird, wobei bei der Eingabe in den Mischer ein Hauptbestandteil in einer Menge eingegeben wird, die anteilsmäßig unterhalb einer unter Berücksichtigung veränderlicher Materialeigenschaften anzusetzenden Mindestmenge liegt, **dadurch gekennzeichnet,** daß der Zustand des Teigs hinsichtlich seiner Viskosität und seiner Homogenität zumindest zu einem ersten Meßzeitpunkt ($t_1$) anhand von gleichförmigen ($\bar{u}$) und impulsförmigen ($u'$) Meßwerten einer im Mischer vom Teig beaufschlagten Sonde (12) überwacht und ausgewertet wird, daß zumindest eine Meßwertdifferenz im Vergleich mit einem einem der Meßwerte zugeordneten Sollwert für den Zustand gebildet wird und daß eine der Meßwertdifferenz entsprechende Ergänzungsmenge an dem Hauptbestandteil zugegeben und eingemischt wird.

2. Verfahren nach Anspruch 1, dadurch gekennzeichnet, daß der erste Meßzeitpunkt in einen ersten Beharrungsbereich ($t_1$) des Meßwerts nach einer Einschwingphase gelegt ist.

3. Verfahren nach Anspruch 2, dadurch gekennzeichnet, daß zumindest einer der Zeitkurven der beiden Meßwerte ($\bar{u}$, $u'$) auf Überschreiten eines Maximalwerts als erstem Beharrungsbereich für die Festlegung des ersten Meßzeitpunkts($t_1$) überwacht wird.

4. Verfahren nach Anspruch 1, 2 oder 3, dadurch gekennzeichnet, daß in zeitlichem Abstand zum ersten Meßzeitpunkt ($t_1$) ein zweiter Meßzeitpunkt ($t_2$) vorgegeben ist, an dem ein zweiter Meßwert mit der Sonde (12) aufgenommen und durch Vergleich mit einem weiteren Sollwert für die Zugabe einer weiteren Ergänzungsmenge ausgewertet wird.

5. Verfahren nach einem der Ansprüche 1 bis 4, dadurch gekennzeichnet, daß als Sonde ein trägheitsarmer Meßfühler eingesetzt wird, der während des Mischens in den Teig eingreift und Reaktionskräfte mit gleichförmigen ($\bar{u}$) wie auch impulsförmigen Anteilen ($u'$) mißt und daß sowohl hinsichtlich des gleichförmigen wie auch des impulsförmigen Meßwertanteils Meßwertdifferenzen zu zuzuordnenden Sollwerten gebildet werden.

6. Verfahren nach einem der Ansprüche 1 bis 5, dadurch gekennzeichnet, daß für die Zugabe einer Ergänzungsmenge ein von einem Temperaturfühler (22) im Mischer gelieferter Temperaturwert zusätzlich berücksichtigt wird.

7. Verfahren nach einem der Ansprüche 1 bis 6, dadurch gekennzeichnet, daß aus den Meßwerten neben einer Ergänzungsmenge an dem Hauptbestandteil auch die weitere Mischdauer bestimmt wird.

8. Verfahren nach einem der Ansprüche 1 bis 7, dadurch gekennzeichnet, daß das Ende des Mischens bzw. Durcharbeitens aus dem Wiederanstieg der impulsförmigen Anteile ($u'$) des Meßwerts bestimmt wird.

9. Verfahren nach einem der Ansprüche 1 bis 8, dadurch gekennzeichnet, daß aus den Meßwerten zusätzlich die Zugabe zumindest einer weiteren Zutat nach Art und Menge bestimmt wird.

10. Verfahren nach einem der Ansprüche 1 bis 9, dadurch gekennzeichnet, daß der zunächst mit weniger als der Mindestmenge und später mit zumindest einer Ergänzungsmenge zugegebene Hauptbestandteil Wasser ist.

11. Verfahren nach Anspruch 10 in Verbindung mit Anspruch 6, dadurch gekennzeichnet, daß die Temperatur des zugegebenen Wassers in Abhängigkeit vom Temperaturwert des Temperaturfühlers (22) vorgegeben wird.

12. Verfahren nach einem der Ansprüche 1 bis 11, dadurch gekennzeichnet, daß die Meßwerte in digitale Werte umgewandelt und in einem Digitalrechner ausgewertet werden.

13. Vorrichtung zur Durchführung des Verfahrens nach einem der Ansprüche 1 bis 12 mit einem Teigmischer, mit einem Mischbehälter, einem Mischantrieb dazu und Dosiereinrichtungen für Mehl, Wasser und/oder sonstigen Zutaten, **dadurch gekennzeichnet,** daß der Mischbehälter (3) mit einem Meßfühler (12) für die Ermittlung des Teigzustandes hinsichtlich seiner Viskosität und Homogenität ausgestattet ist, welcher niederfrequente (ū) und höherfrequente (u') Signale abgibt und an eine Auswerteinrichtung (26) angeschlossen ist, die ihrerseits zumindest eine Dosiereinrichtung (34, 35) steuert.

14. Vorrichtung nach Anspruch 13, dadurch gekennzeichnet, daß der Meßfühler eine trägheitsarme Sonde (13) ist, deren Meßwert durch Filter (28,29) in einen höherfrequenten (u') und einen niederfrequenten (ū) Anteil getrennt wird.

15. Vorrichtung nach Anspruch 13 oder 14, dadurch gekennzeichnet, daß der Meßfühler einen Temperaturfühler (22) umfaßt.

16. Vorrichtung nach einem der Ansprüche 13 bis 15, dadurch gekennzeichnet, daß der Mischantrieb von der Auswerteeinrichtung (26) gesteuert wird.

17. Vorrichtung nach einem der Ansprüche 13 bis 16, dadurch gekennzeichnet, daß die Auswerteinrichtung (26) zumindest einen Digital-Analog-Wandler (30,31) für die zugeführten Meßsignale und einen Digitalrechnerteil umfaßt.

**Claims**

1. A method of preparing dough for bread or fine pastry in which flour and water as the main constituents are placed in a mixer and worked into a dough, the state of which is checked and varied by the addition of a main constituent, whereby during feeding into the mixer a main constituent is introduced in a quantity which is as a proportion less than the minimum quantity which has to be added in consideration of variable material properties, characterised in that the state of the dough in terms of its viscosity and homogeneity is monitored and evaluated at least at one first measurement time ($t_1$) on a basis of equivalent (ū) and pulse-shaped (u') measured values from a probe (12) which is exposed to the dough in the mixer, and in that at least one difference in measured values is formed in comparison with a desired value for the condition and which is associated with one of the measured values and in that a make-up quantity of main constituent corresponding to the difference in measured values is added and blended into the mixture.

2. A method according to Claim 1, characterised in that the first measurement time is disposed on a first plateau ($t_1$) of the measured value after an initial phase.

3. A method according to Claim 2, characterised in that at least one of the time curves of the two measured values (ū, u') is monitored for an overstepping of a maximum value as a first stable range for fixing the first measurement time ($t_1$).

4. A method according to Claim 1, 2 or 3, characterised in that at a time which is spaced apart from the first measurement time ($t_1$) a second measurement time ($t_2$) is provided at which a second measured value is recorded by the probe (12) and evaluated by comparison with a further desired value for the addition of a further make-up quantity.

5. A method according to one of Claims 1 to 4, characterised in that the probe used is a low-inertia measuring sensor which is engaged into the dough during mixing and which measures reaction forces having equivalent (ū) and also pulsed proportions (u') and in that with regard to both the uniform and also the pulsed parts of the measured value desired values are formed which have to be associated with the differences in the measured values.

6. A method according to one of Claims 1 to 5, characterised in that for the addition of a make-up quantity a temperature value supplied by a temperature sensor (22) in the mixer is also taken into account.

7. A method according to one of Claims 1 to 6, characterised in that also the further mixing time is determined from the measured values in addition to a make-up quantity of main constituent.

8. A method according to one of Claims 1 to 7, characterised in that the end of mixing or working is determined from the renewed increase in the pulsed portions (u') of the measured value.

9. A method according to one of Claims 1 to 8, characterised in that from the measured values also the addition of at least one further additive is determined in terms of nature and quantity.

10. A method according to one of Claims 1 to 9, characterised in that the main constituent which is initially to be added at less than the minimum quantity and later at least with a make-up quantity is water.

11. A method according to Claim 10 in conjunction with Claim 6, characterised in that the temperature of the added water is determined as a function of the temperature value of the temperature sensor (22).

12. A method according to one of Claims 1 to 11, characterised in that the measured values are converted to digital values and are evaluated in a digital computer.

13. An apparatus for carrying out the method according to one of Claims 1 to 12 with a dough mixer, with a mixing container, a mixer drive therefor and means of measuring out flour, water and/or other additives, characterised in that the mixing container (3) is equipped with a measuring sensor (12) for ascertaining the state of the dough in terms of its viscosity and homogeneity and which delivers low frequency (u̅) and higher frequency (u') signals and which is connected to an evaluating unit (26) which in turn controls at least one dispensing means (34, 35).

14. An apparatus according to Claim 13, characterised in that the measuring sensor is a low-inertia probe (13) the measured value from which is separated by filters (28, 29) into a higher frequency portion (u') and a lower frequency portion (u̅).

15. An apparatus according to Claim 13 or 14, characterised in that the measuring probe comprises a temperature sensor (22).

16. An apparatus according to one of Claims 13 to 15, characterised in that the mixing drive is controlled by the evaluating means (26).

17. An apparatus according to one of Claims 13 to 16, characterised in that the evaluating means (26) additionally comprises a digital-analogue converter (30, 31) for the measured signals supplied and also comprises a digital computer unit.

**Revendications**

1. Procédé pour la préparation de la pâte destinée au pain et à la pâtisserie, dans lequel farine et eau sont introduits comme composants principaux, dans un mélangeur et sont transformés en une pâte, dont l'état est contrôlé et est modifié par l'addition d'un composant principal, à l'entrée dans le mélangeur un composant principal étant introduit dans une quantité qui se situe, conformément à sa quote-part, en dessous d'une quantité minimale à fixer compte tenu des propriétés variables de la matière, caractérisé en ce que l'état de la pâte est contrôlé, du point de vue de sa viscosité et de son homogénéité, au moins à un premier instant de mesure (t₁) à partir des valeurs mesurées homogènes (u̅) et par impulsions (u') d'une sonde sollicitée par la pâte dans le mélangeur et est interprété, en ce qu'au moins une différence de valeur de mesure est constituée pour l'état en comparant avec une valeur de consigne associée à la valeur de mesure et en ce qu'une quantité complémentaire du composant principal correspondant à la différence de valeur de mesure est ajoutée au mélange et mélangée.

2. Procédé selon la revendication 1, caractérisé en ce que le premier instant de mesure est placé dans une première zone stationnaire (t₁) de la valeur de mesure après une phase de montée.

3. Procédé selon la revendication 2, caractérisé en ce qu'au moins une des deux valeurs de mesure (u̅, u') des courbes en fonction du temps, est contrôlée au dépassement d'une valeur maximale comme première zone stationnaire, pour la détermination du premier instant de mesure (t₁).

4. Procédé selon les revendications 1, 2 ou 3, caractérisé en ce qu'à un intervalle de temps, par rapport au premier instant de mesure (t₁), est prédéfiniun deuxième instant de mesure (t₂), au cours duquel une deuxième valeur de mesure est recueillie avec la sonde (12) et est évaluée par comparaison avec une autre valeur de consigne pour ajouter une quantité de complément.

5. Procédé selon une des revendications 1 à 4, caractérisé en ce que, comme sonde, on utilise un capteur de mesure de faible inertie, qui intervient dans la pâte pendant le mélange et mesure les forces de réaction avec les quote-parts homogènes (u̅) ainsi que par impulsions (u') et en ce qu'aussi bien en ce qui concerne la quote-part de valeur mesurée homogène que par impulsions, des différences de valeurs mesurées sont constituées par rapport aux valeurs de consigne associées.

6. Procédé selon une des revendications 1 à 5, caractérisé en ce que pour rajouter une quantité supplémentaire, on tient compte en plus d'une valeur de température fournie par un capteur de température (22) dans le mélangeur.

7. Procédé selon une des revendications 1 à 6, caractérisé en ce qu'à partir des valeurs mesurées, outre une quantité supplémentaire du composant principal, on peut déterminer aussi la durée du mélange.

8. Procédé selon une des revendications 1 à 7, caractérisé en ce que la fin du mélange ou du malaxage, est déterminée à partir de la remontée des quote-parts (u') par impulsions de la valeur de mesure.

9. Procédé selon une des revendications 1 à 8, caractérisé en ce qu'on détermine à partir des valeurs mesurées en plus l'addition d'au moins un autre ingrédient selon le type et en quantité.

10. Procédé selon une des revendications 1 à 9, caractérisé en ce que le composant principal ajouté d'abord en quantité inférieure à la quantité minimale et plus tard au moins en une quantité supplémentaire, est l'eau.

11. Procédé selon la revendication 10, en liaison avec la revendication 6, caractérisé en ce que la température de l'eau ajoutée est définie en fonction de la valeur de la température du capteur de température (22).

12. Procédé selon une des revendications 1 à 11, caractérisé en ce que les valeurs de mesure sont converties en valeurs numériques et sont évaluées dans un calculateur numérique.

13. Dispositif pour la réalisation du procédé selon une des revendications 1 à 12, avec un mélangeur de pâte, avec un réservoir d'eau, un entraînement du mélangeur et des dispositifs de dosage pour farine, eau et/ou ingrédients habituels, caractérisé en ce que la cuve de mélange (3) est équipée d'un capteur de mesure (12) pour déterminer l'état de la pâte, eu égard à sa viscosité et son homogénéité, capteur qui délivre des signaux basse fréquence (ū) et plus haute fréquence (u') et qui est relié à un dispositif d'exploitation (26), qui, de son côté, commande au moins un dispositif de dosage (34, 35).

14. Dispositif selon la revendication 13, caractérisé en ce que le capteur de mesure est une sonde (13) à faible inertie dont la valeur de mesure est séparée par filtrage (28, 29) en une quote-part de plus haute fréquence (u') et une quote part de basse fréquence (ū).

15. Dispositif selon la revendication 13 ou 14, caractérisé en ce que le capteur de mesure comprend un capteur de température (22).

16. Dispositif selon une des revendications 13 à 15, caractérisé en ce que l'entraînement du mélangeurest commandé par le dispositif d'exploitation (26).

17. Dispositif selon une des revendications 13 à 16, caractérisé en ce que le dispositif d'exploitation (26) comprend au moins un convertisseur numérique-analogique (30, 31) pour les signaux de mesure envoyés et une partie de calculateur numérique.

Figur 1

Figur 2

Figur 3

EP 0 191 288 B1

Figur 4

13

Figur 5

14

Figur 6